# EUROPEAN PATENT APPLICATION

(11) **EP 4 844 560 A1**
(43) Date of publication of application: **25.11.2026**
(21) Application number: 26179470.5
(22) Date of filing: 19.05.2026
(51) Int. Cl.: G06F 3/04883, B60K 35/10, B60K 35/22, B60K 35/29, B60K 35/81

(54) **ELECTRONIC DEVICE AND METHOD OF PROVIDING INTERFACE IN VEHICLE**

(30) Priority: 22.05.2025 US 202563810589 P; 03.07.2025 KR 20250089168
(71) Applicant: 42dot Inc., Seongnam-si, Gyeonggi-do 13449 (KR)
(72) Inventor: Youn, Byungsun, 13449 Seongnam-si (KR); Moon, Kiyeon, 13449 Seongnam-si (KR); Baker Wood, Eric Ross, Sunnyvale, 94085 (US)
(74) Representative: DREISS Patentanwälte PartG mbB

(57) **Abstract**

An electronic device and method of providing an interface in a vehicle are provided. The method includes partitioning a display in the vehicle into a plurality of areas, and providing, for each of the plurality of areas, an interface for a different application. The method may include in response to a user input being obtained through the display, performing, based on a type of the user input, different control operations for one or more of the plurality of areas. The display may include a wide panel extending from a driver's seat in the vehicle to a passenger's seat in the vehicle.

## Description

### CROSS-REFERENCE TO RELATED APPLICATIONS

This application claims the benefit under 35 U.S.C. §119(e) of U.S. Provisional Application No. 63/810,589, filed on May 22, 2025, in the U.S. Patent and Trademark Office, and claims the benefit under 35 USC § 119(a) of Korean Patent Application No. 10-2025-0089168, filed on July 3, 2025, in the Korean Intellectual Property Office (now the Ministry of Intellectual Property (MOIP)), the entire disclosures, all of which, are incorporated herein by reference for all purposes.

### BACKGROUND

### 1. Field of the Invention

One or more embodiments relate to an electronic device and method of providing an interface in a vehicle.

### 2. Description of the Related Art

A graphical user interface (GUI) may refer to a representation of functions using graphics, such as easily understandable icons, to enable a user to easily and conveniently use functions. A display (e.g., a touch panel) installed in a vehicle may display interfaces for various applications installed in the vehicle, including information-providing applications such as a navigation application, a music playback application, and a calling application associated with a smartphone of a driver.

As in-vehicle displays have recently become increasingly larger, areas on a display may not be directly reachable from a driver's seat or a passenger's seat. Accordingly, there is an increasing demand for interface technology capable of providing intuitive and efficient user experience (UX) while considering visibility of a driver and ease of operation on a large display.

The above description is information the inventor(s) acquired during the course of conceiving the present disclosure, or already possessed at the time, and is not necessarily art publicly known before the present application is filed.

### SUMMARY

Embodiments provide technology for controlling an in-vehicle interface through gesture-based interaction without directly reaching all areas of a wide display in a vehicle.

However, the technical aspects are not limited to the aspects described above, and there may be other technical aspects.

According to an aspect, there is provided a method of providing an interface in a vehicle, the method including partitioning a display in the vehicle into a plurality of areas, and providing, for each of the plurality of areas, an interface for a different application. The method may include in response to a user input being obtained through the display, performing, based on a type of the user input, different control operations for one or more of the plurality of areas. The display may include a wide panel extending from a driver's seat in the vehicle to a passenger's seat in the vehicle.

The user input may include a global input for controlling a size or an order of the one or more of the plurality of areas and a local input for controlling an application provided in the one or more of the plurality of areas. The global input and the local input may be defined by different gestures.

The global input may include a first global input and a second global input. The first global input may be distinguished from the second global input by multi-finger swipe gestures having different numbers of fingers.

The performing of the different control operations may include, in response to the global input being obtained, controlling, based on the global input, the size or the order of the one or more of the plurality of areas.

The controlling of the size or the order of the one or more of the plurality of areas may include, in response to the first global input being obtained, controlling the size of the one or more of the plurality of areas. The controlling of the size or the order of the one or more of the plurality of areas may include, in response to the second global input being obtained, controlling the order of the one or more of the plurality of areas.

The controlling of the size or the order of the one or more of the plurality of areas may include, in response to the first global input being obtained, adjusting a size of an area, among the plurality of areas, to which the first global input is applied, based on a direction and a range of the first global input.

The controlling of the order of the one or more of the plurality of areas may include changing an order of the plurality of areas based on a direction of the second global input.

The changing of the order of the plurality of areas may include, in response to a number of the plurality of areas being less than a number of running applications, changing the order of the plurality of areas, based on the direction of the second global input, such that interfaces of the running applications are mapped to the plurality of areas in a cyclic manner. The running applications may be running in one or more of a background and a foreground.

The changing of the order of the plurality of areas may include, in response to the second global input being applied to an area, on the display, oriented toward the driver's seat, changing an order of all the plurality of areas based on the direction of the second global input. The changing of the order of the plurality of areas may include, in response to the second global input being applied to an area, on the display, oriented toward the passenger's seat, changing an order of an interface corresponding to the area oriented toward the passenger's seat among the plurality of areas based on the direction of the second global input.

The performing of the different control operations may include, in response to the local input being obtained, executing a function of an application corresponding to an area, among the plurality of areas, to which the local input is applied, based on the local input.

According to an aspect, there is provided an electronic device for providing an interface in a vehicle, the electronic device including a processor. The electronic device may include a memory storing instructions. The instructions, when executed individually or collectively by the processor, may cause the electronic device to partition a display in the vehicle into a plurality of areas, and provide, for each of the plurality of areas, an interface for a different application. The instructions, when executed individually or collectively by the processor, may cause the electronic device to, in response to a user input being obtained through the display, perform, based on a type of the user input, different control operations for one or more of the plurality of areas. The display may include a wide panel extending from a driver's seat in the vehicle to a passenger's seat in the vehicle.

The user input may include a global input for controlling a size or an order of the one or more of the plurality of areas and a local input for controlling an application provided in the one or more of the plurality of areas. The global input and the local input may be defined by different gestures.

The global input may include a first global input and a second global input. The first global input may be distinguished from the second global input by multi-finger swipe gestures having different numbers of fingers.

The instructions, when executed individually or collectively by the processor, may cause the electronic device to, in response to the global input being obtained, control, based on the global input, the size or the order of the one or more of the plurality of areas.

The instructions, when executed by the processor individually or collectively, may cause the electronic device to, in response to the first global input being obtained, control the size of the one or more of the plurality of areas. The instructions, when executed by the processor individually or collectively, may cause the electronic device to, in response to the second global input being obtained, control the order of the one or more of the plurality of areas.

The instructions, when executed individually or collectively by the processor, may cause the electronic device to, in response to the first global input being obtained, adjust a size of an area, among the plurality of areas, to which the first global input is applied, based on a direction and a range of the first global input.

The instructions, when executed by the processor individually or collectively, may cause the electronic device to change an order of the plurality of areas based on a direction of the second global input.

The instructions, when executed individually or collectively by the processor, may cause the electronic device to, in response to a number of the plurality of areas being less than a number of running applications, change the order of the plurality of areas, based on the direction of the second global input, such that interfaces of the running applications are mapped to the plurality of areas in a cyclic manner. The running applications may be running in one or more of a background and a foreground.

The instructions, when executed individually or collectively by the processor, may cause the electronic device to, in response to the second global input being applied to an area, on the display, oriented toward the driver's seat, change an order of all the plurality of areas based on the direction of the second global input. The instructions, when executed individually or collectively by the processor, may cause the electronic device to, in response to the second global input being applied to an area, on the display, oriented toward the passenger's seat, change an order of an interface corresponding to the area oriented toward the passenger's seat among the plurality of areas based on the direction of the second global input.

The instructions, when executed individually or collectively by the processor, may cause the electronic device to, in response to the local input being obtained, execute a function of an application corresponding to an area, among the plurality of areas, to which the local input is applied, based on the local input.

### BRIEF DESCRIPTION OF THE DRAWINGS

FIG. 1 illustrates an example of a system for providing an interface in a vehicle, according to an embodiment.
FIG. 2 is a diagram illustrating an interface provided in a vehicle, according to an embodiment.
FIG. 3 is a diagram illustrating a multi-window environment, according to an embodiment.
FIG. 4 is a diagram illustrating a method of changing the order of windows based on a global input, according to an embodiment.
FIG. 5 is a diagram illustrating an operation of changing the order of a plurality of areas in a cyclic manner, according to an embodiment.
FIG. 6 is a diagram illustrating a method of changing the size of windows based on a global input, according to an embodiment.
FIGS. 7A and 7B are diagrams illustrating a method of changing the order of a plurality of areas differently based on an area to which a global input is input, according to an embodiment.
FIG. 8 is a flowchart illustrating a method of providing an interface, according to an embodiment.
FIG. 9 illustrates an example of an electronic device, according to an embodiment.

### DETAILED DESCRIPTION

The following structural or functional descriptions of examples are provided as examples only, and various alterations and modifications may be made to the examples. Accordingly, the embodiments are not to be construed as limited to the disclosure and should be understood to include all changes, equivalents, or replacements within the idea and the technical scope of the disclosure.

Although terms of "first," "second," and the like are used to explain various components, the components are not limited to such terms. These terms are used only to distinguish one component from another component. For example, a first component may be referred to as a second component, or similarly, the second component may be referred to as the first component within the scope of the present disclosure.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

Unless otherwise defined, all terms, including technical and scientific terms, used herein have the same meaning as commonly understood by one of ordinary skill in the art to which the present disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, examples are described in detail with reference to the accompanying drawings. When describing the embodiments with reference to the accompanying drawings, like reference numerals refer to like elements, and a repeated description related thereto is omitted.

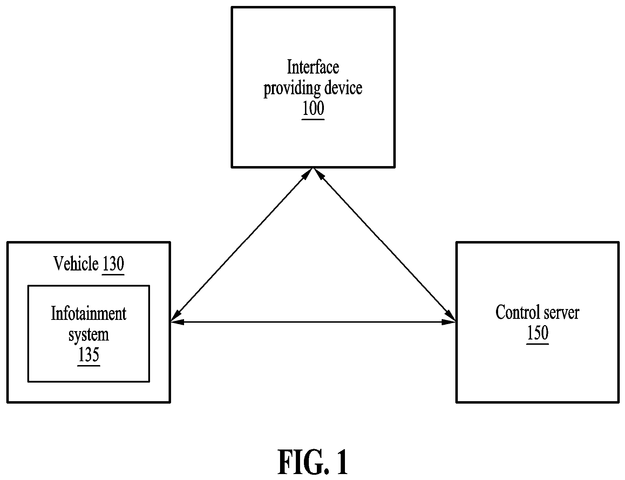

FIG. 1 illustrates an example of a system for providing an interface in a vehicle, according to an embodiment.

Referring to FIG. 1, the system for providing an interface in a vehicle may include an interface providing device 100, a vehicle 130, and a control server 150. However, FIG. 1 is an example for describing the present disclosure, and the scope of the present disclosure should not be construed as being limited thereto. For example, the interface providing device 100 may provide an interface in the vehicle 130 independently without the control server 150.

A device (e.g., the interface providing device 100) for providing an interface to a vehicle may be mounted in the vehicle (e.g., the vehicle 130) or may be implemented in a control server (e.g., the control server 150) to provide the interface to the vehicle 130. The interface providing device 100 may be implemented in a device for executing (or operating) an infotainment system (e.g., an infotainment system 135) in the vehicle 130.

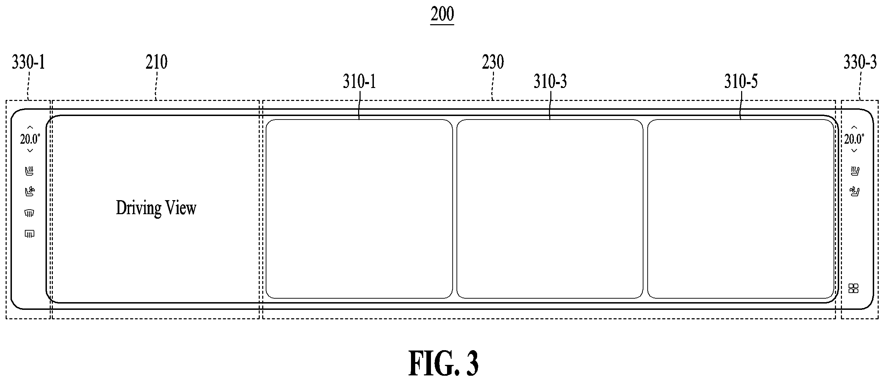

The interface providing device 100 may provide an interface on a display installed in the vehicle 130. The display may include a wide panel extending from a driver's seat in the vehicle to a passenger's seat in the vehicle. The display may be configured as a multi-window environment. For example, the display may be partitioned into a plurality of areas, and an interface for an application may be provided for each area. The multi-window environment will be described in detail with reference to FIG. 3.

The interface may include a graphical user interface (GUI). The GUI may refer to graphical elements provided on the display to enable a user to conveniently use functions of the vehicle 130 and/or an electronic device (not shown) (e.g., a portable electronic device such as a smartphone of the user and/or an Internet-of-Things (IoT) device owned by the user) associated with the vehicle 130. The vehicle 130 may refer to a conveyance for transporting a person and/or an object, and may include, for example, a car, a train, a ship, a boat, an aircraft, a kickboard, and/or a bicycle. The vehicle 130 may include an infotainment system (e.g., the infotainment system 135).

Infotainment, a compound of information and entertainment, may refer to a form of service that combines information and entertainment. The infotainment system 135 may refer to a system installed in the vehicle 130 to provide various information and entertainment functions to the user (e.g., a driver or a passenger) of the vehicle 130. The infotainment system 135 may encompass devices or technologies for providing navigation and/or services (e.g., a phone application) associated with a mobile device (e.g., a smartphone). The infotainment system 135 may provide various types of information to the user. For example, real-time traffic information and information regarding nearby facilities may be provided through a navigation system, and real-time weather information and weather forecasts may be provided through a weather application. The infotainment system 135 may provide the user with various entertainment functions such as audio streaming, video playback, social network services (SNS), Internet search, and game play.

The interface providing device 100 may obtain (e.g., receive) a user input through the display (e.g., a touch panel). The user input may include various gestures. A gesture may include at least one of, for example, a touch, a release, a rotation, a pinch, a spread, a touch drag, a flick, a swipe, a touch and hold, a tap, a double tap, a drag, a drag and drop, multi-swipes (e.g., a multi-finger swipe gesture), a shake, and a rotation defined on the touch panel.

In response to the user input being obtained, the interface providing device 100 may perform different control operations on one or more of the plurality of areas on the display based on a type of the user input. The user input may include a global input for controlling the plurality of areas and a local input for controlling an application (e.g., executing a function of the application) in a specific area. The local input and the global input may be defined by different gestures. The global input may be defined by a multi-finger swipe gesture. The global input may be classified into a first global input and a second global input based on functions thereof, and the first global input and the second global input may be defined by multi-finger swipe gestures having different numbers of fingers. The first global input may be an input for controlling the size of the plurality of areas, and the second global input may be an input for controlling the order of the plurality of areas. For example, the first global input may be defined by a three-finger multi-swipe gesture, and the second global input may be defined by a four-finger multi-swipe gesture.

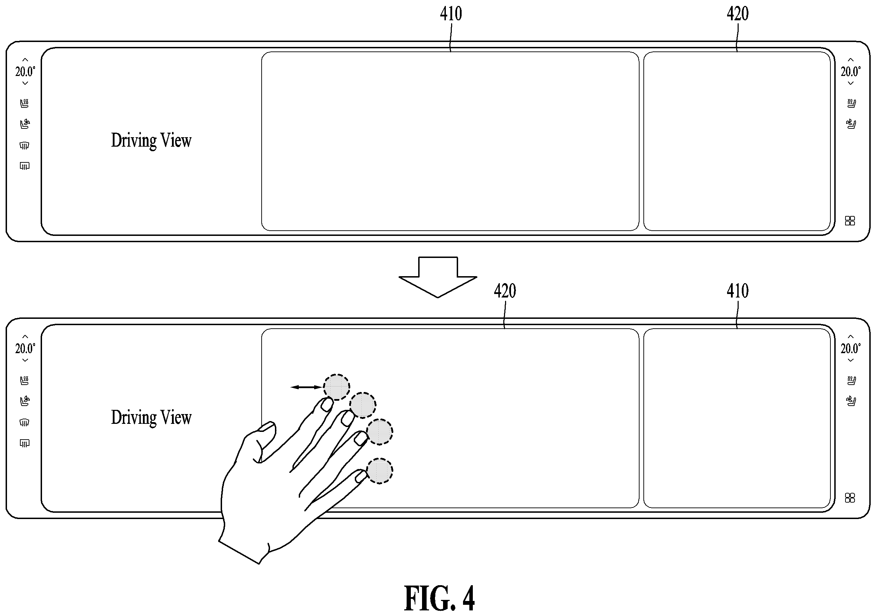

In response to the local input being obtained, the interface providing device 100 may execute a function of an application executed in an area, among the plurality of areas, to which the local input is applied. In response to the global input being obtained, the interface providing device 100 may control the size or order of the plurality of areas on the display. That is, the interface providing device 100 may perform different control operations based on which user input is obtained, and specifically, in response to the global input being obtained, may improve a user experience (UX) for the wide panel by controlling a multi-window environment based on the user input. For example, the interface providing device 100 may enable an area (e.g., an area oriented toward the passenger's seat in the wide panel) that is physically difficult to reach from the driver's seat to be easily controlled from the driver's seat based on the global input. Likewise, the interface providing device 100 may enable an area (e.g., an area oriented toward the driver's seat in the wide panel) that is physically difficult to reach from the passenger's seat to be easily controlled from the passenger's seat based on the global input. A control method based on a specific global input will be described in detail with reference to FIGS. 4 to 7B.

The control server 150 may be a server for controlling and managing the vehicle 130 and/or the interface providing device 100. The control server 150 may monitor the vehicle 130 in real time and manage the vehicle 130. The control server 150 may perform remote control of the vehicle 130.

The interface providing device 100, the vehicle 130, and the control server 150 may communicate with one another via a network (not shown). For example, the network may include a local area network (LAN), a wide area network (WAN), a value-added network (VAN), a mobile radio communication network, a satellite communication network, and combinations thereof. The network may refer to a data communication network in a broad sense that enables the interface providing device 100, the vehicle 130, and the control server 150 to smoothly communicate with one another, and may include a wired Internet, a wireless Internet, and a mobile wireless communication network. In addition, the wireless communication network may include, but is not limited to, a wireless LAN (Wi-Fi), Bluetooth, Bluetooth Low Energy (BLE), ZigBee, Wi-Fi Direct (WFD), ultra-wideband (UWB), infrared communication (IrDA), or near field communication (NFC).

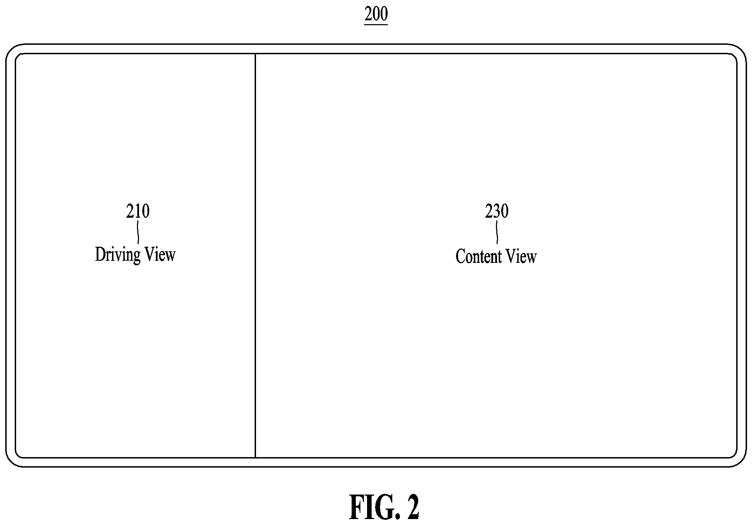

FIG. 2 is a diagram illustrating an interface provided in a vehicle, according to an embodiment.

Referring to FIG. 2, user interfaces (UIs) associated with one or more functions (e.g., applications (e.g., a navigation application, a weather application, a phone application, a music application, a vehicle control application, and/or a climate control application) and/or functions provided by the applications) may be displayed in an interface 200 in a vehicle (e.g., the vehicle 130 of FIG. 1). The UIs may be displayed in respective areas of the interface corresponding to the UIs. As illustrated in FIG. 2, the interface 200 may include a driving view area 210 and a content view area 230 but is not limited thereto. For example, the interface 200 may include only the content view area 230 or may further include an area for executing a function other than the driving view area 210 and the content view area 230. Hereinafter, the interface 200 is described as including the driving view area 210 and the content view area 230; however, the following description may also be applied to other areas being further included.

The driving view area 210 may display a driving environment of the vehicle 130. For example, the driving view area 210 may provide an interface for visually previewing an external condition of the vehicle or a surrounding environment thereof.

The content view area 230 may provide interfaces for various applications. The content view area 230 may be implemented as a single area, as illustrated in FIG. 2; however, as displays become wider, the content view area 230 may be implemented as a multi-window environment partitioned into a plurality of areas. This will be described in detail with reference to FIG. 3.

FIG. 3 is a diagram illustrating an interface provided through a multi-window environment, according to an embodiment.

Referring to FIG. 3, the content view area 230 may be partitioned into a plurality of areas 310-1 to 310-5. FIG. 3 illustrates that the content view area 230 is partitioned into three areas; however, embodiments are not limited thereto, and the content view area 230 may be partitioned into two or four or more areas.

The plurality of areas 310-1 to 310-5 may provide interfaces for different applications. For example, an interface for a navigation application may be provided in the area 310-1, an interface for a music application may be provided in the area 310-3, and an interface for a messenger application may be provided in the area 310-5. In addition, when the number of running applications is less than the number of the plurality of areas 310-1 to 310-5 (e.g., less than three), areas in which applications are not running may be empty. Conversely, the number of running applications may be greater than the number of the plurality of areas 310-1 to 310-5. That is, applications may be running in a background in addition to a foreground. In this case, only applications running in the foreground may be displayed in the plurality of areas 310-1 to 310-5, and applications running in the background may not be displayed in the plurality of areas 310-1 to 310-5. The applications running in the background may be switched to run in the foreground based on a global input and may be displayed in one or more of the plurality of areas 310-1 to 310-5, which will be described in detail with reference to FIG. 4.

The interface 200 may include global navigation bars (GNBs) 330-1 to 330-3. The GNBs 330-1 to 330-3 may refer to top-level menu bars commonly displayed throughout an interface of a website or an application and may enable a user to explore overall functions of the website or the application and access main functions. In addition to the GNB 330-1 displayed in an area oriented toward a driver's seat on the interface 200, the GNB 330-3 may also be displayed in an area oriented toward a passenger's seat for convenience of a passenger. Through the GNB 330-3, the passenger may also control functions of the application more conveniently.

FIG. 4 is a diagram illustrating a method of changing the order of windows based on a global input, according to an embodiment.

Referring to FIG. 4, in response to the global input being obtained, the interface providing device 100 may control the size or order of one or more of a plurality of areas 410 and 420 (e.g., the plurality of areas 310-1 to 310-5 of FIG. 3) based on the global input. Specifically, FIG. 4 illustrates a method of controlling the order of a plurality of areas based on a second global input. The second global input may be defined by a four-finger multi-swipe gesture; however, embodiments are not limited thereto, and the second global input may be defined by any gesture that is different from a first global input.

In response to the global input (e.g., the second global input) being obtained, the interface providing device 100 may control the areas 410 and 420 themselves, rather than functions of applications running in the areas 410 and 420. As illustrated in FIG. 4, when the four-finger multi-swipe gesture is input into the area 410, the interface providing device 100 may control the areas 410 and 420 themselves and may not control a function of an application in the area 410. Conversely, in response to a local input (e.g., a touch input) being applied to the area 410, the interface providing device 100 may execute the function of the application in the area 410 based on the touch input, rather than controlling the area 410 itself.

In response to the second global input being obtained, the interface providing device 100 may control the order of one or more of the plurality of areas 410 and 420. The interface providing device 100 may change the order of the plurality of areas based on a direction of the second global input. For example, when the second global input is input in a left direction (e.g., a swipe from right to left), the interface providing device 100 may change the order of the plurality of areas 410 and 420 in the left direction. As illustrated in FIG. 4, the order of the areas 410 and 420 may be changed in the left direction based on the second global input.

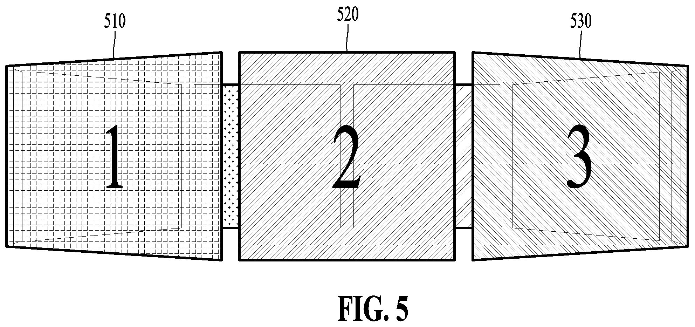

When the number of running applications is greater than the number of the plurality of areas (e.g., when applications are running in a background), the interface providing device 100 may change the order of the plurality of areas in a cyclic manner. This will be described in detail with reference to FIG. 5.

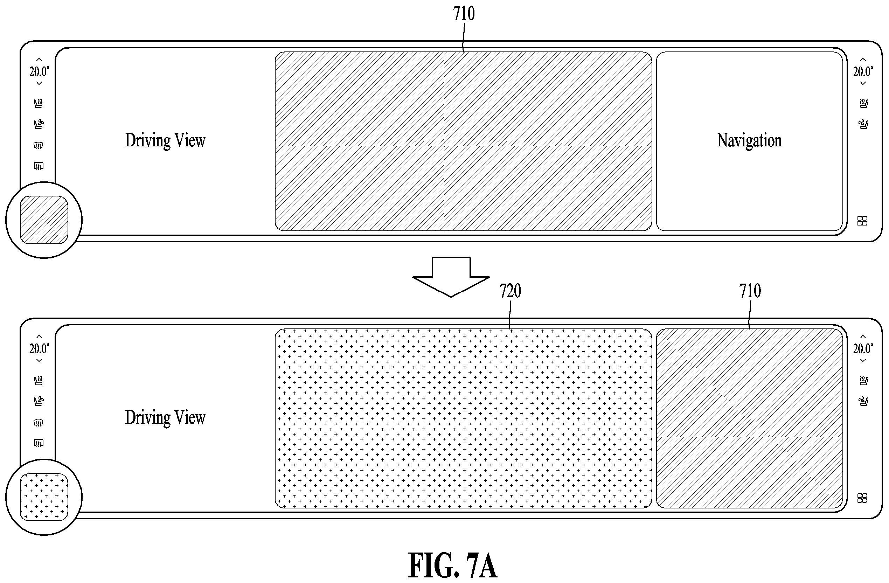

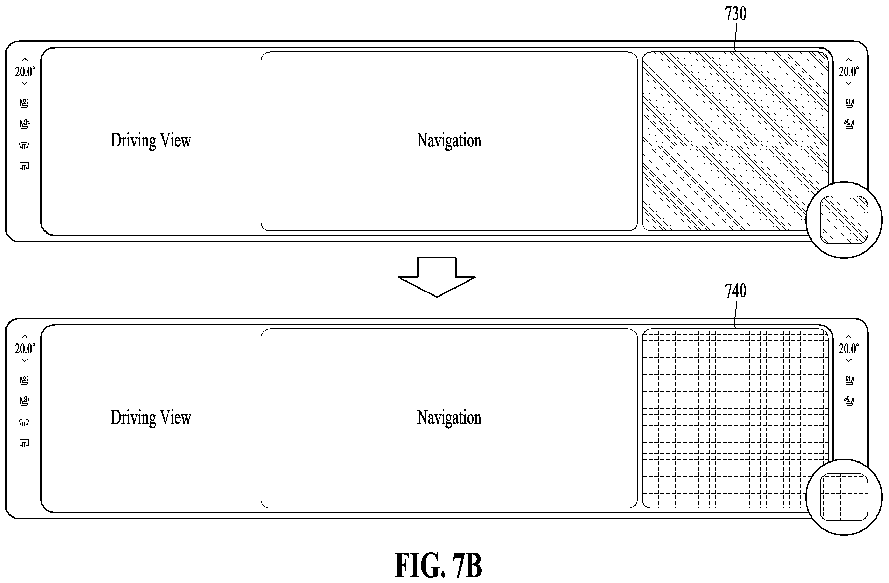

The interface providing device 100 may change the order of the plurality of areas differently based on whether an area to which the second global input is applied is oriented toward a driver's seat or toward a passenger's seat. For example, in response to the second global input being applied to an area oriented toward the driver's seat, the interface providing device 100 may change the order of all the plurality of areas. Conversely, in response to the second global input being applied to an area oriented toward the passenger's seat, the interface providing device 100 may change the order of only a portion of the plurality of areas (e.g., the area oriented toward the passenger's seat). This will be described in detail with reference to FIGS. 7A and 7B.

FIG. 5 is a diagram illustrating an operation of changing order of a plurality of areas in a cyclic manner, according to an embodiment.

Referring to FIG. 5, FIG. 4 illustrates that the number of a plurality of areas (e.g., the plurality of areas 410 and 420 of FIG. 4) is the same as the number of running applications, such that all applications are running in a foreground. Hereinafter, a method of changing the order of the plurality of areas 410 and 420 when the number of the plurality of areas 410 and 420 is less than the number of running applications (e.g., when there are applications running in a background) in response to a second global input being obtained (e.g., received) will be described.

When the number of the plurality of areas 410 and 420 is less than the number of running applications, the interface providing device 100 may change the order of the plurality of areas 410 and 420 such that interfaces of running applications are mapped to the plurality of areas 410 and 420 in a cyclic manner based on a direction of the second global input. For example, it is assumed that applications 510 and 520 are running in the foreground, and application 530 is running in the background. The areas 410 and 420 may display the applications 510 and 520, respectively. In this case, in response to the second global input being obtained in a left direction, an interface providing device (e.g., the interface providing device 100 of FIG. 1) may display an interface of the application 520 in the area 410 and display an interface of the application 530 in the area 420. In this case, the application 510 may run in the background. Further, in response to the second global input being obtained again in the left direction, the interface providing device 100 may display the interface of the application 530 in the area 410 and display an interface of an application corresponding to a next cyclic order in the area 420. Accordingly, the interface providing device 100 may display, in the areas 410 and 420, interfaces of all currently running applications (e.g., applications running in one or more of the foreground and the background) by cyclically shifting the applications based on the second global input.

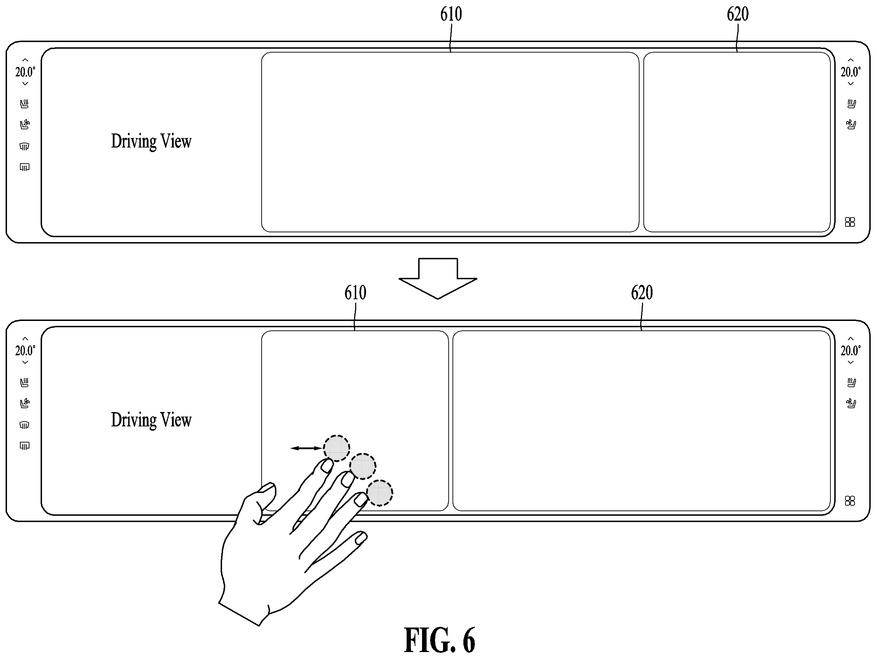

FIG. 6 is a diagram illustrating a method of changing the size of windows based on a global input, according to an embodiment.

Referring to FIG. 6, in response to the global input being obtained, the interface providing device 100 may control the size or order of one or more of a plurality of areas 610 and 620 (e.g., the plurality of areas 410 and 420 of FIG. 4) based on the global input. Specifically, FIG. 6 illustrates a method of controlling the size of a plurality of areas based on a first global input. The first global input may be defined by a three-finger multi-swipe gesture; however, embodiments are not limited thereto, and the first global input may be defined by any gesture that is different from a second global input.

In response to the first global input being obtained, the interface providing device 100 may control the size of one or more of the plurality of areas 610 and 620. The interface providing device 100 may adjust the size of an area, to which the first global input is applied, among the plurality of areas 610 and 620, based on a direction and a range of the first global input. The first global input may be applied to the area 610. The interface providing device 100 may adjust the size of the area 610 based on the first global input. For example, as illustrated in FIG. 6, when the first global input is input to the area 610 in a left direction by a predetermined range, the interface providing device 100 may reduce the area 610 by the predetermined range in the left direction. In another example, when the first global input is input to the area 610 in a right direction by the predetermined range, the interface providing device 100 may expand the area 610 by the predetermined range in the right direction.

FIGS. 7A and 7B are diagrams illustrating a method of changing the order of a plurality of areas differently based on an area to which a global input is input, according to an embodiment.

Specifically, FIG. 7A illustrates that the global input (e.g., a second global input) is applied to an area oriented toward a driver's seat, and FIG. 7B illustrates that the global input is applied to an area oriented toward a passenger's seat.

For convenience of description, it is assumed that the number of running applications is greater than the number of the plurality of areas displayed on an interface. Accordingly, as described with reference to FIG. 5, the order of applications may be changed in a cyclic manner.

Referring to FIG. 7A, in response to the second global input being applied to the area, on the display, oriented toward the driver's seat, an interface providing device (e.g., the interface providing device 100 of FIG. 1) may change the order of all the plurality of areas based on a direction of the second global input. For example, when the second global input is input in a right direction in the area oriented toward the driver's seat, the interface providing device 100 may change the order of the plurality of areas (e.g., an area 710 and a navigation area) in the right direction. The area 710 may be moved to the right, and an area 720, which provides an interface of a next application in a cyclic order, may be displayed at a previous position of the area 710. Accordingly, in response to the second global input being applied to the area oriented toward the driver's seat, the order of all the plurality of areas may be changed.

Referring to FIG. 7B, in response to the second global input being applied to the area, on the display, oriented toward the passenger's seat, the interface providing device 100 may change the order of an interface corresponding to the area oriented toward the passenger's seat among the plurality of areas based on the direction of the second global input. For example, in response to the second global input being applied to the area oriented toward the passenger's seat, the interface providing device 100 may change an area 730 to an area 740 in a cyclic order of applications. An application provided in the area 730 may be replaced with a next application based on the direction of the second global input. The interface providing device 100 may improve the UX of a passenger and/or a driver by changing only the order of the area oriented toward the passenger's seat in response to the second global input being applied to the area oriented toward the passenger's seat.

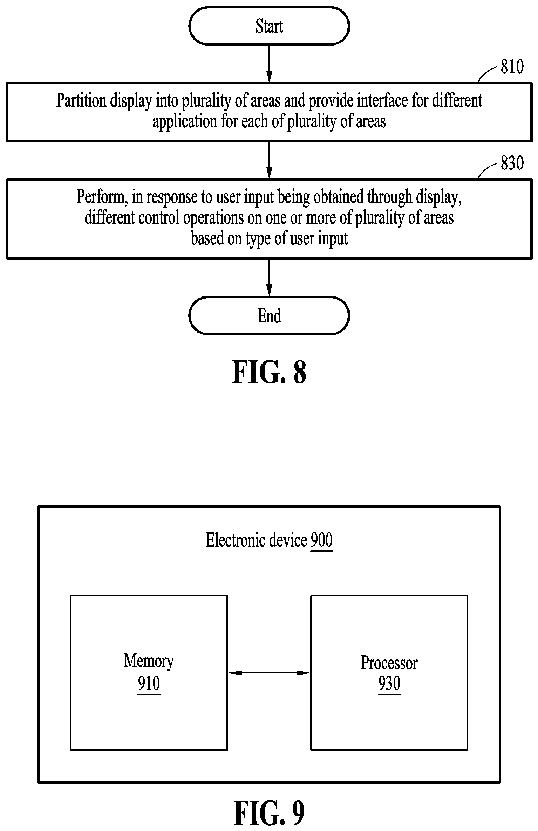

FIG. 8 is a flowchart illustrating a method of providing an interface, according to an embodiment.

Referring to FIG. 8, operations 810 and 830 may be performed sequentially but not necessarily. For example, the order of operations 810 and 830 may be changed, and two operations may be performed in parallel.

In operation 810, an electronic device (e.g., the interface providing device 100 of FIG. 1) may partition a display in a vehicle (e.g., the vehicle 130 of FIG. 1) into a plurality of areas and provide, for each of the plurality of areas, an interface (e.g., the interface 200 of FIG. 3) for a different application. The display may include a wide panel. The interface 200 may be implemented as a multi-window environment based on the wide panel. The multi-window environment has been described in detail with reference to FIG. 3, and thus a repeated description thereof will be omitted.

In operation 830, in response to a user input being obtained through the display, the interface providing device 100 may perform different control operations on one or more of the plurality of areas based on a type of the user input. For example, in response to a local input being obtained, the interface providing device 100 may execute a function of an application based on the local input. In another example, in response to a global input being obtained (e.g., received), the interface providing device 100 may control the plurality of areas based on the global input. In response to a first global input being obtained, the interface providing device 100 may control the size of one or more of the plurality of areas. In response to a second global input being obtained, the interface providing device 100 may control the order of the plurality of areas. The first global input and the second global input may be defined by different gestures (e.g., multi-finger swipe gestures having different numbers of fingers).

FIG. 9 illustrates an example of an electronic device, according to an embodiment.

Referring to FIG. 9, an electronic device 900 may include a memory 910 and a processor 930. The description provided with reference to FIGS. 1 to 8 may also apply to FIG. 9. For example, the interface providing device 100 of FIG. 1 may be the electronic device 900.

The memory 910 may store instructions (or programs) executable by the processor 930. For example, the instructions may include instructions for performing the operation of the processor 930 and/or the operation of each component of the processor 930.

The memory 910 may be implemented as volatile memory device or non-volatile memory device.

The volatile memory device may be implemented as dynamic random-access memory (DRAM), static RAM (SRAM), thyristor RAM (T-RAM), zero capacitor RAM (Z-RAM), or twin transistor RAM (TTRAM).

The non-volatile memory device may be implemented as electrically erasable programmable read-only memory (EEPROM), flash memory, magnetic RAM (MRAM), spin-transfer torque RAM (STT-MRAM), conductive bridging RAM (CBRAM), ferroelectric RAM (FeRAM), phase change RAM (PRAM), resistive RAM (RRAM), nanotube RRAM, polymer RAM (PoRAM), nano floating gate memory (NFGM), holographic memory, a molecular electronic memory device, or insulator resistance change memory.

The processor 930 may process data stored in the memory 910. The processor 930 may execute computer-readable code (e.g., software) stored in the memory 910 and instructions triggered by the processor 930.

The processor 930 may be a data processing device implemented by hardware including a circuit having a physical structure to perform desired operations. The desired operations may include, for example, code or instructions in a program.

For example, the data-processing device implemented by hardware may include a microprocessor, a central processing unit (CPU), a processor core, a multi-core processor, a multiprocessor, an application-specific integrated circuit (ASIC), and a field programmable gate array (FPGA).

The processor 930 may cause the electronic device 900 to perform one or more operations by executing the code and/or instructions stored in the memory 910. The operations performed by the electronic device 900 may be substantially the same as the operations performed by the interface providing device 100 described with reference to FIGS. 1 to 8. Accordingly, a repeated description thereof is omitted.

The embodiments described herein may be implemented using a hardware component, a software component and/or a combination thereof. For example, the apparatus, the method, and the components described in the examples may be implemented using a general-purpose or special-purpose computer, such as a processor, a controller and an arithmetic logic unit (ALU), a digital signal processor (DSP), a microcomputer, an FPGA, a programmable logic unit (PLU), a microprocessor, or any other devices capable of responding to and executing instructions. A processing device may run an operating system (OS) and a software application that runs on the OS. The processing device may also access, store, manipulate, process, and generate data in response to execution of software. For purpose of simplicity, the description of a processing device is used as singular; however, one skilled in the art will appreciate that a processing device may include a plurality of processing elements and/or a plurality of types of processing elements. For example, the processing device may include a plurality of processors, or a single processor and a single controller. In addition, different processing configurations are possible, such as parallel processors.

Software may include a computer program, a piece of code, an instruction, or one or more combinations thereof, to independently or collectively instruct or configure a processing device to operate as desired. The software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in non-transitory computer-readable storage media.

The method according to the above-described embodiments may be recorded in non-transitory computer-readable media including program instructions to implement various operations which may be performed by a computer. The non-transitory computer-readable storage media may also store, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable storage media include magnetic media such as hard disks, floppy disks, and magnetic tape; optical media such as compact disc ROM (CD-ROM) discs and digital video discs (DVDs); magneto-optical media such as floptical disks; and hardware devices that are specifically configured to store and perform program instructions, such as ROM, RAM, flash memory, and the like. Examples of program instructions include both machine code, such as code produced by a compiler, and files including higher level code that may be executed by the computer using an interpreter.

The hardware devices described above may be configured to act as one or more software modules in order to perform the operations of the embodiments described above, or vice versa.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuitry are combined in a different manner, or replaced or supplemented by other components or their equivalents.

Therefore, other implementations, other examples, and equivalents to the claims are also within the scope of the following claims.

## Claims

1. A method of providing an interface in a vehicle, the method comprising:
partitioning a display in the vehicle into a plurality of areas, and providing, for each of the plurality of areas, an interface for a different application; and
in response to a user input being obtained through the display, performing, based on a type of the user input, different control operations for one or more of the plurality of areas,
wherein the display comprises:
a wide panel extending from a driver's seat in the vehicle to a passenger's seat in the vehicle.

2. The method of claim 1, wherein the user input comprises:
a global input for controlling a size or an order of the one or more of the plurality of areas; and
a local input for controlling an application provided in the one or more of the plurality of areas,
wherein the global input and the local input are defined by different gestures.

3. The method of claim 2, wherein the global input comprises:
a first global input; and
a second global input,
wherein the first global input is distinguished from the second global input by multi-finger swipe gestures having different numbers of fingers,
wherein the performing of the different control operations comprises:
in response to the first global input being obtained, controlling the size of the one or more of the plurality of areas; and
in response to the second global input being obtained, controlling the order of the one or more of the plurality of areas.

4. The method of claim 2, wherein the performing of the different control operations comprises:
in response to the global input being obtained, controlling, based on the global input, the size or the order of the one or more of the plurality of areas.

5. The method of claim 3, wherein the controlling of the size or the order of the one or more of the plurality of areas comprises:
in response to the first global input being obtained, adjusting a size of an area, among the plurality of areas, to which the first global input is applied, based on a direction and a range of the first global input.

6. The method of claim 3, wherein the controlling of the order of the one or more of the plurality of areas comprises:
changing an order of the plurality of areas based on a direction of the second global input,
wherein the changing of the order of the plurality of areas comprises:
in response to a number of the plurality of areas being less than a number of running applications, changing the order of the plurality of areas, based on the direction of the second global input, such that interfaces of the running applications are mapped to the plurality of areas in a cyclic manner,
wherein the running applications are running in one or more of a background and a foreground.

7. The method of claim 6, wherein the changing of the order of the plurality of areas comprises:
in response to the second global input being applied to an area, on the display, oriented toward the driver's seat, changing an order of all the plurality of areas based on the direction of the second global input; and
in response to the second global input being applied to an area, on the display, oriented toward the passenger's seat, changing an order of an interface corresponding to the area oriented toward the passenger's seat among the plurality of areas based on the direction of the second global input.

8. The method of claim 2, wherein the performing of the different control operations comprises:
in response to the local input being obtained, executing a function of an application corresponding to an area, among the plurality of areas, to which the local input is applied, based on the local input.

9. An electronic device for providing an interface in a vehicle, the electronic device comprising:
a processor; and
a memory storing instructions,
wherein the instructions, when executed individually or collectively by the processor, cause the electronic device to:
partition a display in the vehicle into a plurality of areas, and provide, for each of the plurality of areas, an interface for a different application; and
in response to a user input being obtained through the display, perform, based on a type of the user input, different control operations for one or more of the plurality of areas,
wherein the display comprises:
a wide panel extending from a driver's seat in the vehicle to a passenger's seat in the vehicle.

10. The electronic device of claim 9, wherein the user input comprises:
a global input for controlling a size or an order of the one or more of the plurality of areas; and
a local input for controlling an application provided in the one or more of the plurality of areas,
wherein the global input and the local input are defined by different gestures.

11. The electronic device of claim 10, wherein the global input comprises:
a first global input; and
a second global input,
wherein the first global input is distinguished from the second global input by multi-finger swipe gestures having different numbers of fingers,
wherein the instructions, when executed individually or collectively by the processor, cause the electronic device to:
in response to the first global input being obtained, control the size of the one or more of the plurality of areas; and
in response to the second global input being obtained, control the order of the one or more of the plurality of areas.

12. The electronic device of claim 10, wherein the instructions, when executed individually or collectively by the processor, cause the electronic device to:
in response to the global input being obtained, control, based on the global input, the size or the order of the one or more of the plurality of areas.

13. The electronic device of claim 11, wherein the instructions, when executed individually or collectively by the processor, cause the electronic device to:
in response to the first global input being obtained, adjust a size of an area, among the plurality of areas, to which the first global input is applied, based on a direction and a range of the first global input.

14. The electronic device of claim 11, wherein the instructions, when executed individually or collectively by the processor, cause the electronic device to:
wherein the instructions, when executed individually or collectively by the processor, cause the electronic device to:
in response to a number of the plurality of areas being less than a number of running applications, change an order of the plurality of areas, based on a direction of the second global input, such that interfaces of the running applications are mapped to the plurality of areas in a cyclic manner,
wherein the running applications are running in one or more of a background and a foreground.

15. The electronic device of claim 14, wherein the instructions, when executed individually or collectively by the processor, cause the electronic device to:
in response to the second global input being applied to an area, on the display, oriented toward the driver's seat, change an order of all the plurality of areas based on the direction of the second global input; and
in response to the second global input being applied to an area, on the display, oriented toward the passenger's seat, change an order of an interface corresponding to the area oriented toward the passenger's seat among the plurality of areas based on the direction of the second global input.
